# EUROPÄISCHE PATENTSCHRIFT

(11) **EP 1 169 207 B1**
(45) Veröffentlichungstag und Bekanntmachung des Hinweises auf die Patenterteilung: **27.08.2003**
(21) Anmeldenummer: 00926934.1
(22) Anmeldetag: 14.04.2000
(51) Int. Cl.: B61G 11/12

(54) **ZUG-/DRUCK-PUFFER FÜR ANHÄNGEVORRICHTUNGEN AN SCHIENEN- UND RADFAHRZEUGEN**
TRACTION/COMPRESSION BUFFER FOR COUPLING DEVICES ON RAIL AND WHEEL-MOUNTED VEHICLES
TAMPON DE TRACTION/COMPRESSION POUR DISPOSITIFS D'ATTELAGE INSTALLES SUR DES VEHICULES SUR RAILS OU DES VEHICULES A ROUES

(30) Priorität: 22.04.1999 DE 19918195
(43) Veröffentlichungstag der Anmeldung: 09.01.2002
(73) Patentinhaber: Leben, Klaus, 82335 Berg (DE)
(72) Erfinder: LEBEN, Klaus, D-82335 Berg (DE); STARKER, Bernhard, D-86987 Schwabsoien (DE)
(74) Vertreter: Grättinger & Partner (GbR)
(86) Internationale Anmeldenummer: EP0003382
(87) Internationale Veröffentlichungsnummer: WO00065248

(56) Entgegenhaltungen:
- DE-A1- 3 311 549
- GB-A- 1 266 596
- GB-A- 2 312 659
- US-A- 3 729 101
- US-A- 5 160 123
- US-A- 5 927 523

## Beschreibung

Die vorliegende Erfindung betrifft einen Zug-/Druck-Puffer für Anhängevorrichtungen an Schienen- und Radfahrzeugen, umfassend ein Gehäuse und ein einseitig aus diesem herausragendes Kolbenelement, das aus einer Nullstellung heraus jeweils gegen den Widerstand einer Federeinrichtung und einer Dämpfungseinrichtung in zwei Richtungen bewegbar ist.

Doppelt wirkende Zug-/Druck-Puffer der vorstehend angegebenen Art dämpfen sowohl in Druckrichtung wirkende Aufprallstöße wie auch in Zugrichtung wirkende Anfahrstöße; sie kommen insbesondere bei verschiedenen Fahrzeugen, namentlich bei Schienenfahrzeugen zum Einsatz. Angestrebt wird dabei eine stark gedämpfte Einfederund schwach gedämpfte Ausfederbewegung des Kolbenelements bei Aufpral1stößen und eine schwach gedämpfte Herausziehbewegung und stark gedämpfte Rückstellbewegung des Kolbenelements bei Anfahrstößen. Bei einem bekannten gattungsgemäßen Zug-/Druck-Puffer, der in der Firmenschrift "Wir sind am Zug" (S. 11) der Scharfenbergkupplung GmbH, Salzgitter, veranschaulicht ist, weist das Gehäuse einen Hohlraum auf, in den eine Pufferpatrone eingesetzt ist, welche in sich eine - dem Rückstellen des Kolbenelements aus seiner eingedrückten Stellung dienende - Federeinrichtung und eine- das Eindrücken des Kolbenelements in das Gehäuse dämpfende - Dämpfungseinrichtung vereinigt und durch das Kolbenelement bei dem durch Aufprallstöße ausgelösten Hereinschieben in das Gehäuse beaufschlagt wird. Zum Abfangen von Anfahrstößen, durch welche das Kolbenelement aus dem Gehäuse herausgezogen wird, sind in einem zwischen dem Kolbenelement und dem Gehäuse ausgebildeten ringförmigen Hohlraum in axialer Richtung aufeinander gleitende metallische Federringe vorgesehen, wobei die Dämpfungscharakteristik insbesondere der Rückstellbewegung des Kolbenelements in die Nullstellung durch die Reibung zwischen den einzelnen Federringen definiert ist.

Nachteilig bei dem bekannten Zug-/Druck-Puffer der gattungsgemäßen Art ist insbesondere das hohe Gewicht. Des weiteren sind die bekannten Zug-/Druck-Puffer relativ teuer.

Hieraus leitet sich die der vorliegenden Erfindung zugrundeliegende Aufgabenstellung ab, die darin besteht, einen Zug-/Druck-Puffer der gattungsgemäßen Art zu schaffen, der sich gegenüber dem Stand der Technik durch ein geringeres Gewicht sowie geringere Herstellkosten auszeichnet.

Gemäß der vorliegenden Erfindung wird diese Aufgabe dadurch gelöst, daß zur Dämpfung der Rückstellbewegung des Kolbenelements aus seiner aus dem Gehäuse herausgezogenen Stellung in Richtung auf die Nullstellung eine hydraulische Dämpfungseinrichtung vorgesehen ist, die einen den Schaft des Kolbenelements umgebenden ringförmigen hydraulischen Arbeitsraum und einen im Inneren des als Hohlkolben ausgeführten Kolbenelements angeordneten Überströmraum umfaßt, wobei der Arbeitsraum über mindestens einen das Kolbenelement durchquerenden Überströmkanal mit dem Überströmraum in Verbindung steht. Der erfindungsgemäße Zug-/Druck-Puffer zeichnet sich mit anderen Worten dadurch aus, daß zur Dämpfung der Rückstellbewegung des Kolbenelements bei Anfahrstößen eine hydraulisch wirkende Dämpfungseinrichtung vorgesehen ist. Maßgeblich geprägt ist diese hydraulische Dämpfungseinrichtung durch einen ringförmigen hydraulischen Arbeitsraum, der innen durch das Kolbenelement und außen bevorzugt durch das Gehäuse begrenzt ist. Das Volumen dieses ringförmigen hydraulischen Arbeitsraumes verringert sich, wenn das Kolbenelement über seine Nullstellung hinaus aus dem Gehäuse herausgezogen wird. Dabei wird ein Dämpfungsmedium aus dem ringförmigen hydraulischen Arbeitsraum über den mindestens einen Überströmkanal in einen Überströmraum hinein verdrängt. Die Unterbringung des Überströmraumes im Inneren des Kolbenelements ist dabei von besonderem Vorteil im Hinblick auf eine kompakte Gestaltung des Zug-/Druck-Puffers. Bei der durch die entsprechend dem Anfahrstoß beaufschlagte Federeinrichtung hervorgerufenen Rückstellung des Kolbenelements aus seiner herausgezogenen Stellung in Richtung auf die Nullstellung strömt das Dämpfungsmedium aus dem Überströmraum über die - bevorzugt verengten - Überströmkanäle zurück in den ringförmigen hydraulischen Arbeitsraum, wodurch die Rückstellbewegung eine Dämpfung erfährt.

Durch die erfindungsgemäße Gestaltung des Zug-/Druck-Puffers läßt sich somit die die Rückstellbewegung des Kolbenelements bei Anfahrstößen dämpfende Dämpfungseinrichtung in jenes Gehäuse integrieren bzw. darin unterbringen, das auch die die Einfederbewegung des Kolbenelements bei Aufprallstößen dämpfende Dämpfungseinrichtung aufnimmt. Als Folge hiervon lassen sich leistungsfähige Zug-/Druck-Puffer besonders kompakt und mit geringen Abmessungen herstellen. Dies zieht unmittelbar eine Gewichtsreduktion und auch eine Senkung der Herstellkosten nach sich. Zudem ist für bestimmte Anwendungen von Vorteil, daß durch den kompakten Aufbau des erfindungsgemäßen Zug-/Druck-Puffers der für diesen benötigte Einbauraum besonders gering ausfallen kann.

Eine erste bevorzugte Weiterbildung des erfindungsgemäßen Zug-/Druck-Puffers zeichnet sich dadurch aus, daß das Kolbenelement einen zylindrischen Hohlraum umschließt, wobei der Überströmraum innerhalb des zylindrischen Hohlraumes durch einen in diesem dichtend verschiebbar geführten Trennkolben abgeteilt ist. Der Trennkolben weicht dabei innerhalb des von dem Hohlkolben umschlossenen zylindrischen Hohlraumes entsprechend dem Überströmvolumen des Dämpfungsmediums aus dem ringförmigen hydraulischen Arbeitsraum in den Überströmraum aus. Dies läßt sich im Rahmen einer abermals bevorzugten Weiterbildung ausnutzen, indem der vom Hohlkolben umschlossene zylindrische Hohlraum durch den Trennkolben in den Überströmraum einerseits und einen Federraum andererseits unterteilt ist. Dementsprechend ist die Anfahrstöße abfedernde Federeinrichtung bei dieser Weiterbildung in dem vom Hohlkolben umschlossenen zylindrischen Hohlraum untergebracht; sie wirkt auf diejenige Stirnfläche des Trennkolbens, die der dem Überströmraum zugewandten Stirnfläche gegenübersteht. Grundsätzlich kommen dabei für den technisch konstruktiven Aufbau der Federeinrichtung unterschiedliche Gestaltungen in Betracht. So lassen sich beispielsweise mechanische Federn wie Schrauben und Tellerfedern ebenso einsetzen wie Elastomerblöcke oder auch Gasdruckfedern. Von besonderem Vorteil, wiederum im Hinblick auf das Gewicht sowie die Kompaktheit des erfindungsgemäßen Zug-/Druck-Puffers ist dabei die Ausführung der Federeinrichtung in Form einer Gasdruckfeder.

Eine andere bevorzugte Weiterbildung des erfindungsgemäßen Zug-/Druck-Puffers ist dadurch gekennzeichnet, daß der ringförmige hydraulische Arbeitsraum axial durch einen Ringkolben geschlossen ist, der an der Innenfläche des Gehäuses und an der Außenfläche des Kolbenelements verschiebbar dichtend geführt ist. Diese Form des axialen Abschlusses des ringförmigen hydraulischen Arbeitsraumes ermöglicht, daß sich dessen Volumen lediglich beim Herausziehen des Kolbenelements aus dem Gehäuse über die Nullstellung hinaus verändert, nicht jedoch beim Hineinschieben des Kolbenelements in das Gehäuse über die Nullstellung hinaus. Auf diese Weise läßt sich erreichen, daß die zur Dämpfung der Rückstellbewegung des Kolbenelements bei Anfahrstößen dienende Dämpfungseinrichtung das Dämpfungsverhalten der Aufprallstöße dämpfenden Dämpfungseinrichtung in keiner Weise beeinflußt. Wird bei Aufprallstößen das Kolbenelement aus seiner Nullstellung heraus in das Gehäuse hineingedrückt, so folgt der Ringkolben der Bewegung des Kolbenelements, so daß sich das Volumen des ringförmigen hydraulischen Arbeitsraumes nicht ändert. Besonders bevorzugt wird der Ringkolben dabei über einen an der Außenfläche des Kolbenelements vorgesehenen Mitnehmer nachgeführt, der in der Nullstellung des Kolbenelements stirnseitig an dem Ringkolben anliegt.

Gemäß einer Alternative kann der Ringkolben in eine Zylinderbüchse übergehen, in der das Kopfteil des Kolbenelements dichtend verschiebbar geführt ist. In diesem Falle ist der ringförmige hydraulische Arbeitsraum außen nicht durch das Gehäuse begrenzt sondern vielmehr durch die mit dem Ringkolben in Verbindung stehende Zylinderbüchse.

Besonders bevorzugt ist auch zur Dämpfung des Hereindrückens des Kolbenelements in das Gehäuse bei Aufprallstößen eine hydraulische Dämpfungseinrichtung vorgesehen. Diese umfaßt gemäß einer bevorzugten Weiterbildung der Erfindung einen durch das Kolbenelement, das Gehäuse und eine Zwischenwand begrenzten hydraulischen Hochdruckraum, der über mindestens einen Überströmkanal mit einem Niederdruckraum in Verbindung steht. Dabei kann das Gehäuse insbesondere einen zylindrischen Hohlraum umfassen, der durch einen in diesem dichtend verschiebbar geführten Trennkolben in einen Federraum, in dem die die Rückstellung des eingedrückten Kolbenelements in seine Nullstellung bewirkende Federeinrichtung untergebracht ist, und den hydraulischen Niederdruckraum unterteilt ist. Der mindestens eine den Hochdruckraum mit dem Niederdruckraum verbindende Überströmkanal ist dabei in der Zwischenwand des Gehäuses vorgesehen. Auch diese Weiterbildung des erfindungsgemäßen Zug-/Druck-Puffers begünstigt wiederum die Möglichkeit, diesen besonders kompakt und leicht aufzubauen und somit kostengünstig herzustellen.

Eine besonders vorteilhafte Weiterbildung zeichnet sich dabei dadurch aus, daß dem Überströmkanal ein den Strömungsquerschnitt beeinflussendes Steuerelement zugeordnet ist, das mit dem Kolbenelement verbunden ist. Die Stellung des Steuerelements zu dem mindestens einen Überströmkanal ändert sich somit in Abhängigkeit von der Stellung des Kolbenelements relativ zum Gehäuse. Hierdurch läßt sich die Dämpfungscharakteristik der Aufprallstöße dämpfenden Dämpfungseinrichtung gezielt in Abhängigkeit von dem Maß der Einfederung des Kolbenelements in das Gehäuse einstellen, um über dem gesamten Einfederweg eine möglichst konstante Dämpfungskraft bereitzustellen. Das Steuerelement kann dabei insbesondere als mehr oder weniger weit in den Überströmkanal hineinragender Steuerstift, dessen Querschnitt sich in axialer Richtung ändert, ausgeführt sein. Alternativ hierzu kommt beispielsweise die Ausführung des Steuerelements in Form einer Steuerhülse in Betracht, welche Bohrungen aufweist, die beim Eintreten der Steuerhülse in den Überströmkanal zunehmend verschlossen werden.

Weist in der weiter oben dargelegten Weise das Gehäuse eine den hydraulischen Hochdruckraum begrenzende Zwischenwand auf, so ist in diese gemäß einer wiederum anderen bevorzugten Weiterbildung der Erfindung mindestens ein den Hochdruckraum mit dem Niederdruckraum verbindender Überlastkanal vorgesehen, dem ein Überdruckventil zugeordnet ist. Ein derartiges einen Überlastkanal und ein Überdruckventil umfassendes Überlastsystem dient dem gezielten Druckabbau im Hochdruckraum bei extremen Bedingungen, um eine Beschädigung des Zug-/Druck-Puffers zu verhindern. Die Überlastsicherung ist dabei wiederum im Zusammenhang zu sehen mit dem besonders kompakten und leichten Aufbau des erfindungsgemäßen Zug-/Druck-Puffers.

Schließlich kann gemäß einer Weiterbildung der Erfindung vorgesehen sein, daß dem mindestens einen Überströmkanal der die Rückstellbewegung des Kolbenelements aus seiner aus dem Gehäuse herausgezogenen Stellung im die Nullstellung dämpfenden hydraulischen Dämpfungseinrichtung ein einseitig wirkendes Drosselventil zugeordnet ist. Dieses reduziert in Strömungsquerschnitt des mindestens einen Überströmkanals beim Rückströmen des Dämpfungsmediums aus dem Überströmraum in den ringförmigen hydraulischen Arbeitsraum beim Rückfedern des Kolbenelements aus seiner herausgezogenen Stellung in seine Nullstellung. Bei Anwendung eines entsprechend einseitig wirkenden Drosselventils läßt sich der Strömungsquerschnitt des mindestens einen Strömungskanals im übrigen so groß wählen, daß die Herausziehbewegung des Kolbenelements aus dem Gehäuse, bei der das Drosselventil nicht aktiv ist, praktisch ungedämpft allein gegen die Kraft der entsprechenden Federeinrichtung erfolgt.

Im folgenden wird die vorliegende Erfindung anhand zweier in der Zeichnung dargestellter bevorzugter Ausführungsbeispiele näher erläutert. Dabei zeigt
- Fig. 1: einen Längsschnitt durch eine erste Ausführungsform des erfindungsgemäßen Zug-/Druck-Puffers bei Nullstellung des Kolbenelements,
- Fig. 2: den Puffer gemäß Fig. 1 bei eingedrücktem Kolbenelement,
- Fig. 3: den Puffer gemäß den Fig. 1 und 2 bei herausgezogenem Kolbenelement und
- Fig. 4: einen Längsschnitt durch eine zweite bevorzugte Ausführungsform des erfindungsgemäßen Zug/Druck-Puffers bei Nullstellung des Kolbenelements.

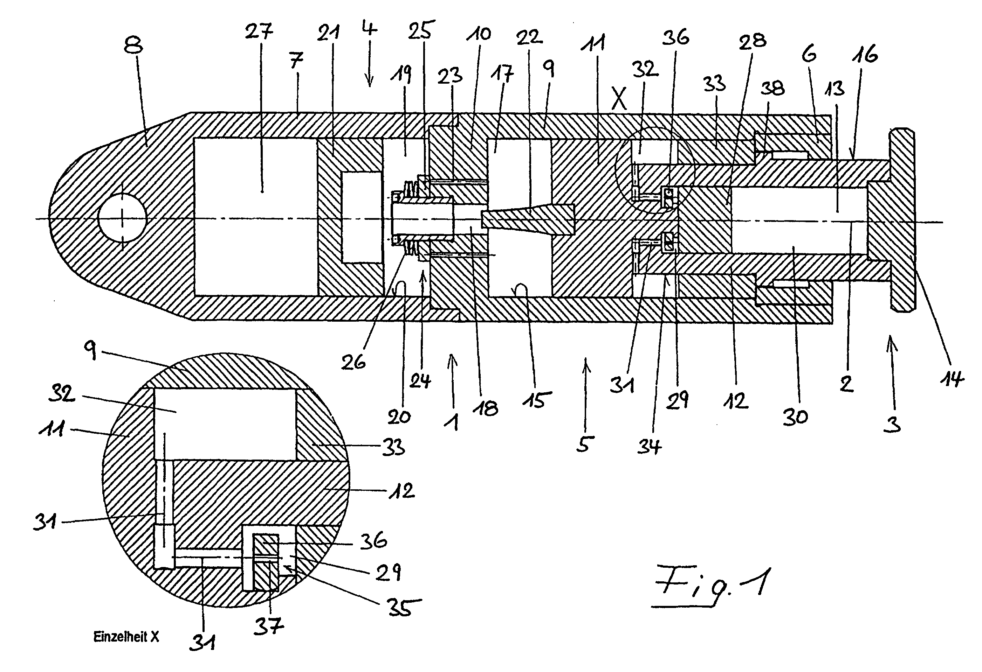

Die Hauptkomponenten des in den Fig. 1 bis 3 veranschaulichten Zug-/Druck-Puffers bilden das Gehäuse 1 und das in diesem längs der Achse 2 verschiebbar geführte Kolbenelement 3. Das Gehäuse 1 besteht im wesentlichen aus einem inneren Abschnitt 4, einem äußeren Abschnitt 5 und einem Abschlußteil 6. Der innere Abschnitt 4 umfaßt wiederum einen Zylinderabschnitt 7 und einen Anschlußabschnitt 8. Der äußere Abschnitt 5 des Gehäuses 1 umfaßt einen Zylinderabschnitt 9 und eine Zwischenwand 10. Das Abschlußteil 6 ist endseitig in den Zylinderabschnitt 9 des äußeren Abschnitts 5 des Gehäuses 1 eingesetzt.

Das Kolbenelement 3 umfaßt ein Kopfteil 11 und einen Schaft 12. In dem Schaft 12 ist dabei ein zylindrischer Hohlraum 13 vorgesehen. Dieser ist endseitig durch die Pufferplatte 14 verschlossen.

Das Kolbenelement 3 ist in dem Gehäuse 1 längs der Achse 2 verschiebbar geführt. Hierzu ist das Kopfteil 11 des Kolbenelements an der Innenwand 15 des Zylinderabschnitts 9 des äußeren Abschnitts 5 des Gehäuses 1 dichtend geführt. Ferner ist der Schaft 12 des Kolbenelements 3 im Bereich seiner Außenfläche 16 in einer entsprechenden Bohrung des Abschlußteils 6 geführt.

Die Zwischenwand 10, die Innenfläche 15 des Zylinderabschnitts 9 des äußeren Abschnitts 5 des Gehäuses 1 sowie das Kopfteil 11 des Kolbenelements 3 definieren einen Hochdruckraum 17. Dieser steht über einen Überströmkanal 18 mit einem Niederdruckraum 19 in Verbindung. Der Niederdruckraum 19 ist dabei definiert durch die Zwischenwand 10, die Innenfläche 20 des Zylinderabschnitts 7 des inneren Abschnitts 4 des Gehäuses 1 sowie einen Trennkolben 21, der in dem Zylinderabschnitt 7 des inneren Abschnitts 4 des Gehäuses 1 dichtend längs der Achse 2 verschiebbar geführt ist. Der Hochdruckraum 17, der Überströmkanal 18 sowie der Niederdruckraum 19 bilden dabei die wesentlichen Komponenten der Dämpfungseinrichtung, die der Dämpfung des Hineinschiebens des Kolbenelements 3 in das Gehäuse 1 bei Aufprallstößen dient. Zur Beeinflussung der Dämpfungscharakteristik ist an dem Kopfteil 11 des Kolbenelements 3 ein Steuerstift 22 befestigt. Dieser ragt in der in Fig. 1 veranschaulichten Nullstellung des Kolbenelements 3 geringfügig in den Überströmkanal 18 hinein. Infolge seines sich vergrößernden Durchmessers verengt er beim Einfedern des Kolbenelements 3 in das Gehäuse zunehmend den freien Strömungsquerschnitt des Überströmkanals, wodurch die Dämpfung zunimmt.

Nicht dargestellt ist in der Zeichnung ein üblicherweise vorgesehenes, zwischen dem Niederdruckraum und dem Hochdruckraum angeordnetes Rückschlagventil, das beim Rückfedern des Kolbenelements aus seiner in das Gehäuse eingedrückten Stellung in seine Nullstellung öffnet und somit eine weitgehend ungedämpfte Rückstellbewegung des Kolbenelements ermöglicht.

In Ergänzung zu dem Überströmkanal 18 ist der Hochdruckraum 17 mit dem Niederdruckraum 19 über Überlastkanäle 23 verbunden. Diesen Überlastkanälen ist ein in dem Niederdruckraum 19 angeordnetes Überdruckventil 24 zugeordnet. Das Überdruckventil 24 umfaßt eine Ringscheibe 25, welche über Tellerfedern 26 zur Anlage an der Zwischenwand 10 vorgespannt wird. Überschreitet die Differenz der im Hochdruckraum 17 einerseits und im Niederdruckraum 19 andererseits herrschenden Drücke einen vorgegebenen Wert, so hebt die Ringscheibe 25 von der Zwischenwand 10 ab und öffnet auf diese Weise die Überlastkanäle 23.

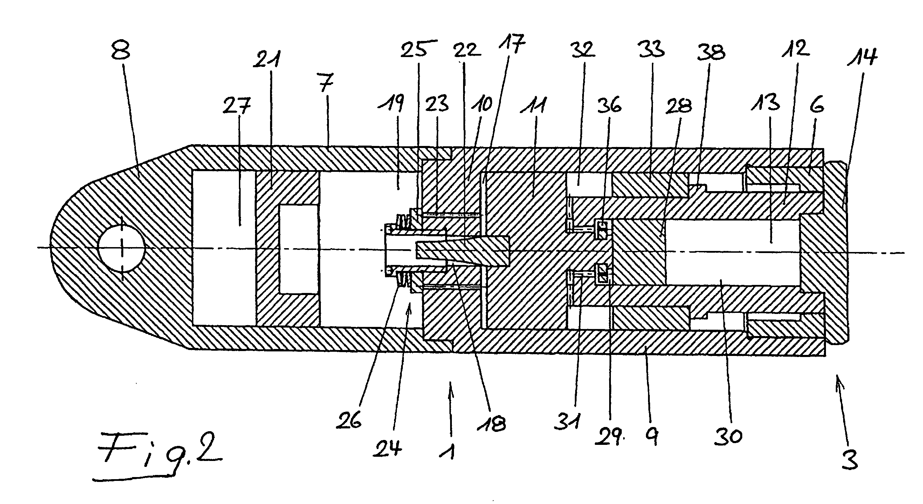

Der Zylinderabschnitt 7 des inneren Abschnitts 4 des Gehäuses 1 und der Trennkolben 21 definieren im übrigen einen Federraum 27. Dieser Federraum 27 ist mit unter Druck (z. B. 5-20 bar bei Nullstellung des Kolbenelements) stehenden Gas gefüllt, so daß auf den Trennkolben 21 eine Gasfeder wirkt, die wiederum infolge der hydraulischen Koppelung des Niederdruckraumes 19 und des Hochdruckraumes 17 miteinander eine Rückstellkraft auf das eingefederte Kolbenelement 3 (Fig. 2) ausübt.

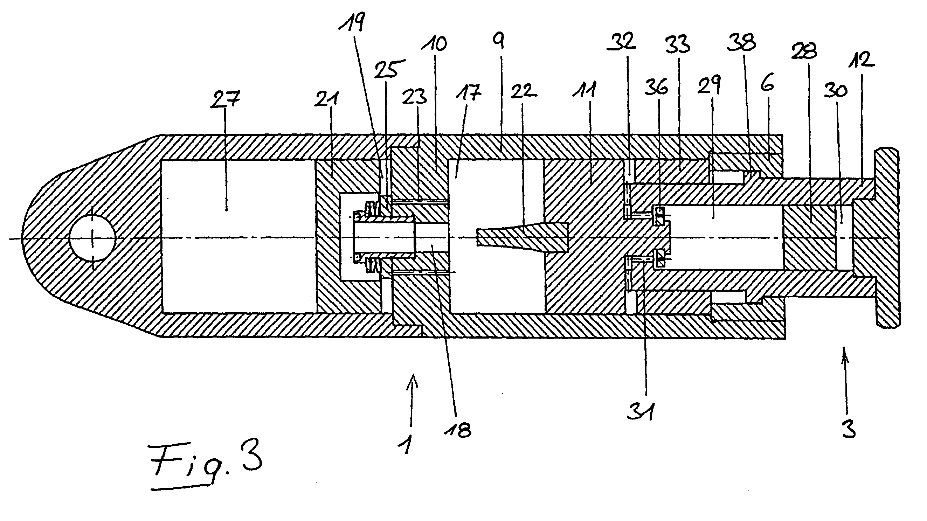

In dem in dem Schaft 12 des Kolbenelements 3 vorgesehenen zylindrischen Hohlraum 13 ist ein Trennkolben 28 längs der Achse 2 verschiebbar dichtend geführt. Dieser Trennkolben 28 unterteilt den zylindrischen Hohlraum 13 in einen Überströmraum 29 und einen Federraum 30. Der Überströmraum steht dabei über Überströmkanäle 31 mit einem ringförmigen hydraulischen Arbeitsraum 32 in Verbindung, der das Kolbenelement 3 im Bereich des Schafts 12 außen umgibt. Der ringförmige hydraulische Arbeitsraum 32 ist im übrigen begrenzt durch das Kopfteil 11 des Kolbenelements 3, die Innenfläche 13 des Zylinderabschnitts 9 des äußeren Abschnitts 5 des Gehäuses 1 sowie einen Ringkolben 33, der an der Innenfläche 15 des Zylinderabschnitts 9 des äußeren Abschnitts 5 des Gehäuses 1 einerseits und der Außenfläche 34 des Schafts 12 des Kolbenelements 3 andererseits dichtend geführt ist. Beim Herausziehen des Kolbenelements 3 aus dem Gehäuse 1 (vgl. Fig. 3) verringert sich das Volumen des ringförmigen hydraulischen Arbeitsraumes 32. Das in diesem befindliche Dämpfungsmedium wird über die Überströmkanäle 31 in den Überstromraum 29 hinein verdrängt, wodurch sich der Trennkolben 28 innerhalb des zylindrischen Hohlraumes 13 verschiebt. Dabei vergrößert sich der Überströmraum 29 zu Lasten des Federraumes 30, der mit unter hohem Druck (z. B. 100-150 bar bei Nullstellung des Kolbenelements, d. h. erheblich höher als der Druck im Federraum 27) stehenden Gas gefüllt ist. Der steigende Druck des in dem Federraum 30 eingeschlossenen Gases übt auf den Trennkolben 28 eine Rückstellkraft aus, die durch zunehmende Verdrängung des Dämpfungsmediums aus dem Überströmraum 29 in den ringförmigen hydraulischen Arbeitsraum 32 hinein ein Einfedern des herausgezogenen Kolbenelements 3 (Fig. 3) in seine Nullstellung (Fig. 1) bewirkt.

Die Dämpfungscharakteristik wird dabei über ein als Plattenventil 35 ausgeführtes Drosselventil gesteuert. Die Ventilplatte 36 verfügt hierzu über Bohrungen 37, die koaxial zu den axialen Abschnitten der Überströmkanäle 31 ausgerichtet sind, jedoch einen geringeren Durchmesser aufweisen als diese. Die Ventilplatte ist dabei zwischen zwei Stellungen axial verschiebbar dergestalt, daß das Dämpfungsmedium lediglich bei der Rückströmung aus dem Überströmraum 29 in den ringförmigen hydraulischen Arbeitsraum 32 die Bohrungen 37 passieren muß, nicht jedoch bei umgekehrter Durchströmung der Überströmkanäle 31.

In der Nullstellung des Kolbenelements 3 (Fig. 1) liegt der Ringkolben 33 mit seiner dem ringförmigen hydraulischen Arbeitsraum 32 abgewandten Stirnseite sowohl an der Stirnfläche des Abschlußteils 6 wie auch an einem Mitnehmer 38 an, der in Form eines Bundes auf der Außenfläche des Schafts 12 des Kolbenelements 3 vorgesehen ist. Wird das Kolbenelement 3 bei einem Aufprallstoß in das Gehäuse 1 hineingedrückt (Fig. 2) so verschiebt sich der Ringkolben 33 infolge seiner Anlage an dem Mitnehmer 38 gemeinsam mit dem Kolbenelement 3. Das Volumen des ringförmigen hydraulischen Arbeitsraumes 32 bleibt auf diese Weise während des Einfederns des Kolbenelements und seines anschließenden Wiederausfederns in die Nullstellung konstant. Eine Dämpfung von Aufprallstößen erfolgt somit ausschließlich über die den Hochdruckraum 17, den Überströmkanal 18 sowie den Niederdruckraum 19 umfassende Dämpfungseinrichtung. Wird demgegenüber das Kolbenelement 3 bei einem Anfahrstoß aus dem Gehäuse 1 herausgezogen (Fig. 3), stützt sich der Ringkolben 33 an dem Abschlußteil 6 ab, wodurch, wie bereits dargelegt, das Volumen des ringförmigen hydraulischen Arbeitsraumes 32 unter Verdrängung von Dämpfungsmedium in den Überströmraum 29 hinein reduziert wird. Zwar erfolgt hier, wie ein Vergleich der Fig. 1 und 3 miteinander zeigt, auch eine Verdrängung von Dämpfungsmedium aus dem Niederdruckraum 19 über den Überströmkanal 18 in den Hochdruckraum 17 hinein. Jedoch ist aufgrund des großen Strömungsquerschnitts des Überströmkanals 18 bei herausgezogenem Steuerstift 22 der Dämpfungseinfluß vergleichsweise gering.

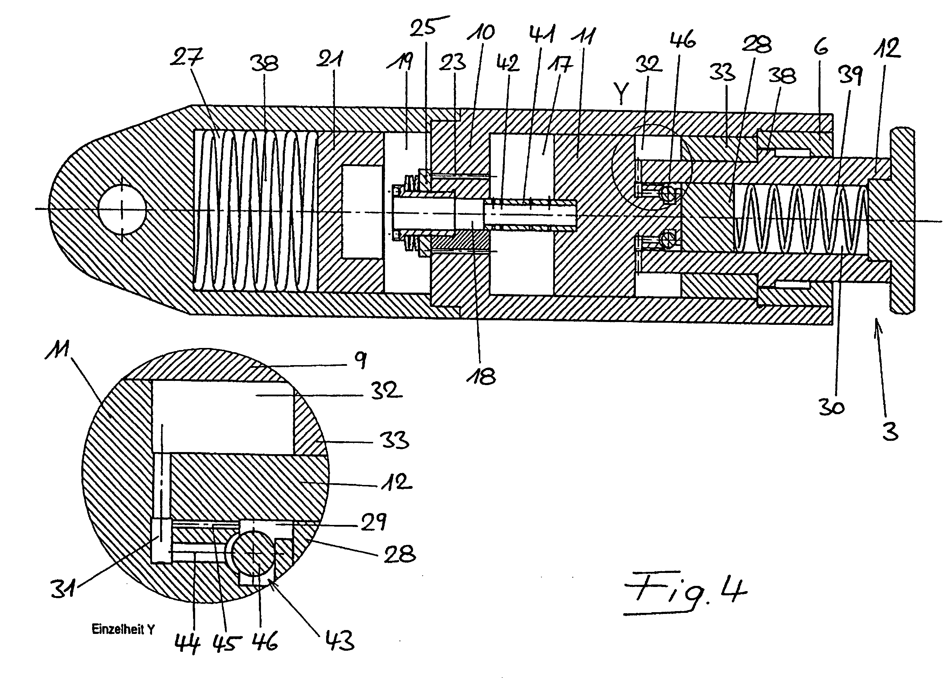

Der in Fig. 4 veranschaulichte Zug-/Druck-Puffer entspricht hinsichtlich seines grundsätzlichen Aufbaus dem vorstehend erläuterten Puffer gemäß den Fig. 1 bis 3. Es wird zur Vermeidung von Wiederholungen auf die entsprechenden Ausführungen Bezug genommen. Erläutert werden nachstehend lediglich die Unterschiede.

So sind zum einen in den beiden Federräumen 27 und 30 Schraubenfedern 39 bzw. 40 vorgesehen, um die erforderlichen Rückstellkräfte zur Rückstellung des Kolbenelements 3 in seine Nullstellung bereitzustellen.

Des weiteren ist anstelle des Steuerstifts 22 gemäß den Fig. 1 bis 3 eine Steuerhülse 41 vorgesehen, die entsprechend der Bewegung des Kolbenelements 3 mehr oder weniger tief in den Überströmkanal 18 eintaucht. Die Steuerhülse weist eine Mehrzahl von Bohrungen 42 auf, die das Innere der Steuerhülse 41 mit dem Hochdruckraum 17 verbinden. Je nachdem, wie weit die Steuerhülse 41 in die Zwischenwand 10 eintaucht, ist eine mehr oder weniger große Anzahl der Bohrungen 42 verschlossen, wodurch sich der für den Durchtritt von Dämpfungsmedium zur Verfügung stehenden Strömungsquerschnitt entsprechend ändert.

Schließlich ist anstelle des in den Fig. 1 bis 3 veranschaulichten Plattenventils 35 ein Kugelventil 43 vorgesehen. Die Überströmkanäle 31 umfassen Hauptbohrungen 44 und Nebenbohrungen 45. Bei Anfahrstößen kann Dämpfungsmedium aus dem ringförmigen hydraulischen Arbeitsraum 32 sowohl über die Hauptbohrungen 44 wie auch über die Nebenbohrungen 45 in den Überströmraum 29 gelangen. Hingegen verschließen die Kugeln 46 des Kugelventils 43 bei umgekehrter Strömungsrichtung die Hauptbohrungen 44, so daß der Strömungsquerschnitt auf die Nebenbohrungen 45 beschränkt ist.

Lediglich zur Klarstellung sei ergänzt, daß die Angabe, wonach beispielsweise das Kopfteil 11 des Kolbenelements 3 bzw. der Trennkolben 21 in dem Gehäuse 1 geführt sind, keinesfalls dahingehend ausgelegt werden darf, daß hier zwingend eine direkte Berührung der jeweiligen Teile miteinander vorhanden ist, nicht jedoch eine fest in das Gehäuse eingesetzte Zylinderbüchse oder dergleichen vorgesehen sein darf.

Entsprechendes gilt für die Führung des Ringkolbens 33 in dem Gehäuse 1 und die Führung des Trennkolbens 28 in dem Kolbenelement 3.

## Patentansprüche

1. Zug-/Druck-Puffer für Anhängevorrichtungen an Schienen- und Radfahrzeugen, umfassend ein Gehäuse (1) und ein einseitig aus diesem herausragendes Kolbenelement (3), das aus einer Nullstellung heraus jeweils gegen den Widerstand einer Federeinrichtung und einer Dämpfungseinrichtung in zwei Richtungen bewegbar ist,
**dadurch gekennzeichnet,**
**daß** zur Dämpfung der Rückstellbewegung des Kolbenelements (3) aus seiner aus dem Gehäuse (1) herausgezogenen Stellung in Richtung auf die Nullstellung eine hydraulische Dämpfungseinrichtung vorgesehen ist, die einen den Schaft (12) des Kolbenelements (3) umgebenden ringförmigen hydraulischen Arbeitsraum (32) und einen im Inneren des als Hohlkolben ausgeführten Kolbenelements (3) angeordneten Überströmraum (29) umfaßt, wobei der Arbeitsraum (32) über mindestens einen das Kolbenelement (3) durchquerenden Überströmkanal (31) mit dem Überströmraum (29) in Verbindung steht.

2. Zug-/Druck-Puffer nach Anspruch 1,
**dadurch gekennzeichnet,**
**daß** das Kolbenelement (3) einen zylindrischen Hohlraum (13) umschließt, wobei der Überströmraum (29) innerhalb des zylindrischen Hohlraumes (13) durch einen in diesem dichtend verschiebbar geführten Trennkolben (28) abgeteilt ist.

3. Zug-/Druck-Puffer nach Anspruch 2,
**dadurch gekennzeichnet,**
**daß** der Trennkolben (28) den vom Hohlkolben umschlossenen zylindrischen Hohlraum (13) in den Überströmraum (29) und einen Federraum (30) unterteilt.

4. Zug-/Druck-Puffer nach einem der Ansprüche 1 bis 3,
**dadurch gekennzeichnet,**
**daß** der ringförmige hydraulische Arbeitsraum (32) axial durch einen Ringkolben (33) geschlossen ist, der an der Innenfläche (15) des Gehäuses (1) und an der Außenfläche (34) des Kolbenelements (3) dichtend geführt ist.

5. Zug-/Druck-Puffer nach Anspruch 4,
**dadurch gekennzeichnet,**
**daß** die Außenfläche (34) des Kolbenelements (3) einen Mitnehmer (38) aufweist, der beim Eindrücken des Kolbenelements (3) aus seiner Nullstellung den Ringkolben (33) nachführt.

6. Zug-/Druck-Puffer nach einem der Ansprüche 1 bis 5,
**dadurch gekennzeichnet,**
**daß** zur Dämpfung des Hereindrückens des Kolbenelements (3) in das Gehäuse (1) eine hydraulische Dämpfungseinrichtung vorgesehen ist, die einen durch das Kolbenelement (3), das Gehäuse (1) und eine Zwischenwand (10) begrenzten hydraulischen Hochdruckraum (17) umfaßt.

7. Zug-/Druck-Puffer nach Anspruch 6,
**dadurch gekennzeichnet,**
**daß** das Gehäuse (1) einen zylindrischen Hohlraum umfaßt, der durch einen in diesem dichtend verschiebbar geführten Trennkolben (21) in einen Federraum (27) und einen hydraulischen Niederdruckraum (19) unterteilt ist, wobei der Niederdruckraum (19) über mindestens einen Überströmkanal (18) mit dem Hochdruckraum (17) in Verbindung steht.

8. Zug-/Druck-Puffer nach Anspruch 7,
**dadurch gekennzeichnet,**
**daß** dem Überströmkanal (18) ein den Strömungsquerschnitt beeinflussendes Steuerelement (22; 41) zugeordnet ist, das mit dem Kolbenelement (3) verbunden ist.

9. Zug-/Druck-Puffer nach einem der Ansprüche 6 bis 8,
**dadurch gekennzeichnet,**
**daß** die Zwischenwand (10) mindestens einen den Hochdruckraum (17) mit dem Niederdruckraum (19) verbindenden Überlastkanal (23) aufweist, dem ein Überdruckventil (24) zugeordnet ist.

10. Zug-/Druck-Puffer nach einem der Ansprüche 1 bis 9,
**dadurch gekennzeichnet,**
**daß** dem mindestens einen Überströmkanal (31) der das Herausziehen des Kolbenelements (3) aus dem Gehäuse (1) dämpfenden hydraulischen Dämpfungseinrichtung ein einseitig wirkendes Drosselventil (35; 43) zugeordnet ist.

## Claims

1. Traction/compression buffer for coupling devices on rail and wheel-mounted vehicles, comprising of a housing (1) and a piston element (3) which projects out of the said housing on one side and which can be moved out of a zero position in two directions against the resistance of a spring device and a damping device, **characterised in that** a hydraulic damping device is provided to move the piston element (3) out of the position in which it is drawn out of the housing (1) in the direction of the zero position for the damping of the return movement. Said hydraulic damping device comprises a ring-shaped hydraulic working chamber (32) which surrounds a shaft (12) of the piston element (3), whereby the piston element (3) is formed within the interior of the piston bore and incorporates an overflow chamber (29), and whereby the said working chamber (32) is in communication with the overflow chamber (29) via at least one overflow channel (31) which crosses the piston element (3).

2. Traction/compression buffer according to Claim 1, **characterised in that** the piston element (3) encloses a cylindrical bore (13), whereby the overflow chamber (29) is sub-divided within the said cylindrical bore (13) by a separating piston (28) which is sealingly and slideably disposed within the same.

3. Traction/compression buffer according to Claim 2, **characterised in that** the separating piston (28) subdivides the cylindrical bore (13) that is enclosed by the piston into the overflow chamber (29) and a spring chamber (30).

4. Traction/compression buffer according to one of the preceding Claims 1 to 3, **characterised in that** the ring-shaped hydraulic working chamber (32) is axially enclosed by a ring piston (33) which is sealingly disposed on the interior surface (15) of the housing (1) and on the exterior surface (34) of the piston element (3).

5. Traction/compression buffer according to Claim 4, **characterised in that** the external surface (34) of the piston element (3) incorporates a follower (38) which pulls the ring piston (33) when the piston element (3) is pressed out of its zero position.

6. Traction/compression buffer according to one of the preceding Claims 1 to 5, **characterised in that** a hydraulic damping mechanism is incorporated for the damping of the compression movement of the piston element (3) into the housing (1), whereby the same incorporates a hydraulic high pressure chamber (17) that is enclosed by the piston element (3), the housing (1) and a bulkhead (10).

7. Traction/compression buffer according to Claim 6, **characterised in that** the housing (1) incorporates a cylindrical bore which is sub-divided by a separating piston (21) that is sealingly disposed within the same and separated into a spring chamber (27) and a hydraulic low pressure chamber (19), whereby the low pressure chamber (19) is in communication with the high pressure chamber (17) via at least one overflow channel (18).

8. Traction/compression buffer according to Claim 7, **characterised in that** the overflow channel (18) is connected to a control element (22; 41) which influences the current cross-section and which is in communication with the piston element (3).

9. Traction/compression buffer according to one of the preceding Claims 6 to 8, **characterised in that** the bulkhead (10) incorporates at least one overflow channel (23) connecting the high pressure chamber (17) with the low pressure chamber (19), to which a pressure relief valve (24) is allocated.

10. Traction/compression buffer according to one of the preceding Claims 1 to 9, **characterised in that** at least one overflow channel (31) facilitates the retraction of the piston element (3) from the housing (1) with the aid of a damping hydraulic damping mechanism and a one-directional throttle valve (35; 43) which is allocated to the same.

## Revendications

1. Tampon de traction/compression pour des dispositifs d'attelage installés sur des véhicules sur rails et des véhicules sur roues, comprenant un corps (1) et un élément formant piston (3), qui fait saillie hors dudit corps d'un côté et peut être déplacé depuis une position neutre dans deux directions, à l'encontre de la force résistante d'un système de ressorts et d'un dispositif d'amortissement, **caractérisé en ce qu'**il est prévu pour l'amortissement du mouvement de rappel de l'élément formant piston (3) depuis sa position sortie du corps (1) en direction de la position neutre, un dispositif d'amortissement hydraulique qui comprend une chambre de travail (32) hydraulique annulaire entourant la jupe (12) de l'élément formant piston (3) et une chambre de décharge (29) aménagée à l'intérieur de l'élément formant piston (3) conformé en piston creux, la chambre de travail (32) communiquant avec la chambre de décharge (29) par l'intermédiaire d'au moins un canal de décharge (31) qui traverse transversalement l'élément formant piston (3).

2. Tampon de traction/compression selon la revendication 1, **caractérisé en ce que** l'élément formant piston (3) renferme une cavité (13) cylindrique, la chambre de décharge (29) située à l'intérieur de la cavité cylindrique (13) étant divisée par un piston de séparation (28) guidé de manière étanche avec possibilité de coulissement dans ladite cavité.

3. Tampon de traction/compression selon la revendication 2, **caractérisé en ce que** le piston de séparation (28) subdivise la cavité cylindrique (13) délimitée par le piston creux en la chambre de décharge (29) et une chambre à ressort (30).

4. Tampon de traction/compression selon une des revendications 1 à 3, **caractérisé en ce que** la chambre de travail hydraulique (32) annulaire est fermée dans la direction axiale par un piston annulaire (33) qui est guidé avec étanchéité sur la surface intérieure (15) du corps (1) et sur la surface extérieure (34) de l'élément formant piston (3).

5. Tampon de traction/compression selon la revendication 4, **caractérisé en ce que** la surface extérieure (34) de l'élément formant piston (3) présente un entraîneur (38) qui entraîne le piston annulaire (33) lorsque l'élément formant piston (3) est repoussé en direction de l'intérieur depuis sa position neutre.

6. Tampon de traction/compression selon une des revendications 1 à 5, **caractérisé en ce qu'**il est prévu pour amortir le mouvement de rentrée de l'élément formant piston (3) un dispositif d'amortissement hydraulique qui comprend une chambre à haute pression (17), délimitée par l'élément formant piston (3), le corps (1) et une paroi intermédiaire (10).

7. Tampon de traction/compression selon la revendication 6, **caractérisé en ce que** le corps (1) comprend une cavité cylindrique qui est divisée par un piston de séparation (21), guidé de manière étanche avec possibilité de coulissement dans celle-ci, en une chambre à ressort (27) et une chambre hydraulique basse pression (19), la chambre hydraulique basse pression (19) communiquant avec la chambre hydraulique haute pression (19) par l'intermédiaire d'au moins un canal de décharge (18).

8. Tampon de traction/compression selon la revendication 7, **caractérisé en ce qu'**au canal de décharge (18) est associé un élément de contrôle (22; 41) qui agit sur la section d'écoulement et est lié à l'élément formant piston (3).

9. Tampon de traction/compression selon une des revendications 6 à 8, **caractérisé en ce que** la paroi intermédiaire (10) comporte au moins un canal de surcharge (23) reliant la chambre haute pression (17) à la chambre basse pression (19), auquel est associée une soupape de surpression (24).

10. Tampon de traction/compression selon une des revendications 1 à 9, **caractérisé en ce qu'**au canal de décharge (31) au nombre d'au moins un du dispositif d'amortissement hydraulique amortissant le mouvement de sortie de l'élément formant piston (3) hors du corps (1) est associée une soupape d'étranglement (35, 42) qui n'agit que dans une direction.
